# EUROPEAN PATENT APPLICATION

(11) **EP 4 679 662 A1**
(43) Date of publication of application: **14.01.2026**
(21) Application number: 24767138.1
(22) Date of filing: 05.03.2024
(51) Int. Cl.: H02J 7/00, B60L 50/60, B60L 58/12, B60L 58/18

(54) **POWER CONTROL DEVICE, VEHICLE, AND POWER CONTROL METHOD**

(30) Priority: 06.03.2023 JP 2023033871
(71) Applicant: HONDA MOTOR CO., LTD., Tokyo 105-8404 (JP)
(72) Inventor: SHUTO, Kenta, Wako-shi, Saitama 351-0193 (JP); AMAGAI, Taro, Wako-shi, Saitama 351-0193 (JP)
(74) Representative: Weickmann & Weickmann PartmbB
(86) International application number: PCT/JP2024/008269
(87) International publication number: WO 2024/185771

(57) **Abstract**

A power control device that controls transmission of power between a plurality of batteries connected in parallel and a load comprises: a power synthesis unit that synthesizes the power output from the plurality of batteries; and a power control unit that controls an output of the power from each of the plurality of batteries, and that also controls driving of the load with the power output from the power synthesis unit, wherein the power control unit determines a power value caused to be output from each of the plurality of batteries by performing: a setting process of setting a power limit value for limiting the output of the power for each of the plurality of batteries, based on temperature information of each of the plurality of batteries; and a distribution process of distributing a demand power value demanded for driving the load to the plurality of batteries so that a power value output from each of the plurality of batteries does not exceed the power limit value.

## Description

### TECHNICAL FIELD

The present invention relates to a power control device, a vehicle, and a power control method.

### BACKGROUND ART

Patent Literatures 1 and 2 each disclose a configuration of a system that drives a load (for example, a motor) by connecting a plurality of batteries in parallel.

### CITATION LIST

### PATENT LITERATURE

PTL1: Japanese Patent Publication No. 5022623
PTL2: Japanese Patent Publication No. 5333457

### SUMMARY OF INVENTION

### TECHNICAL PROBLEM

When a plurality of batteries are used in parallel, a demand power value demanded for driving a load is shared by the plurality of batteries. However, in a commonly used battery, a power range in which the power can be stably output varies depending on the temperature (the internal temperature) of the battery. Hence, unless the demand power value is shared in consideration of the temperature of each of the plurality of batteries, it may be difficult to obtain the total power value stably, such as a case where the total value of the power (a total power value) obtained from the plurality of batteries does not temporarily satisfy the demand power value.

Therefore, an object of the present invention is to provide a technique capable of stably obtaining power from a plurality of batteries connected in parallel.

### SOLUTION TO PROBLEM

In order to achieve the above object, a power control device as one aspect of the present invention is a power control device that controls transmission of power between a plurality of batteries connected in parallel and a load, the power control device characterized by comprising: a power synthesis unit that synthesizes the power output from the plurality of batteries; and a power control unit that controls an output of the power from each of the plurality of batteries, and that also controls driving of the load with the power output from the power synthesis unit, wherein the power control unit determines a power value caused to be output from each of the plurality of batteries by performing: a setting process of setting a power limit value for limiting the output of the power for each of the plurality of batteries, based on temperature information of each of the plurality of batteries; and a distribution process of distributing a demand power value demanded for driving the load to the plurality of batteries so that a power value output from each of the plurality of batteries does not exceed the power limit value.

### ADVANTAGEOUS EFFECTS OF INVENTION

According to the present invention, for example, it becomes possible to provide a technique capable of stably obtaining power from a plurality of batteries connected in parallel.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.

FIG. 1 is a schematic diagram illustrating a configuration example of a power control system according to one embodiment of the present invention.
FIG. 2 is a flowchart illustrating power value determination processing for each battery.
FIG. 3 is a flowchart illustrating the power value determination processing for each battery.
FIG. 4 is a diagram for describing a specific example of the power value determination processing for each battery.
FIG. 5 is a diagram illustrating an example of correspondence relationship information between a battery temperature and a power limit value.
FIG. 6 is a diagram illustrating a setting example of Number 1 and a coefficient αₙ.

### DESCRIPTION OF EMBODIMENTS

Hereinafter, embodiments of the present invention will be described with reference to the drawings. The present invention is not limited to the following embodiments, and also includes configuration changes and modifications within the scope of the gist of the present invention. In addition, all combinations of features described in the embodiments are not necessarily essential to the present invention. Note that the same components are denoted by the same reference signs, and their descriptions will be omitted.

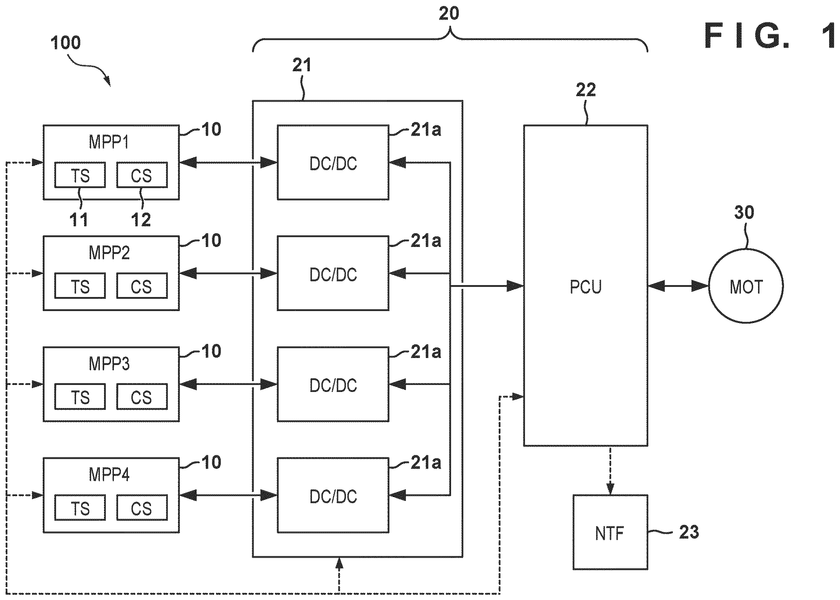

A power control system 100 according to one embodiment of the present invention will be described. FIG. 1 is a schematic diagram illustrating a configuration example of the power control system 100 according to the present embodiment. In FIG. 1, a solid arrow indicates a power transmission path (for example, a high-voltage cable), and a broken arrow indicates an information and data transmission path (for example, a controller area network (CAN)).

The power control system 100 includes a plurality of batteries 10, a power control device 20, and a load 30, and controls the driving of the load 30 using the plurality of batteries 10 in parallel. In the case of the present embodiment, a motor can be used as the load 30, but without being limited to this, any device other than the motor may be used. In addition, the power control system 100 in the present embodiment can be mounted on an electric vehicle, a hybrid vehicle, or the like. The vehicle on which the power control system 100 is mounted may be a four-wheeled vehicle or any vehicle other than the four-wheeled vehicle, such as a straddle type vehicle (a motorcycle or a tricycle). Furthermore, the power conversion system 100 in the present embodiment may be mounted on, for example, a work machine used in a construction site or for landscape construction, equipment other than a vehicle such as a vessel or an aircraft, and/or a moving body.

The plurality of batteries 10 are connected in parallel with one another to the power control device 20. Each of the plurality of batteries 10 is configured as a portable power supply unit (referred to as a battery module or a battery unit, in some cases) configured to be detachable from the power control system 100 or a vehicle or the like on which the power control system is mounted. That is, each of the plurality of batteries 10 is replaceable with another charged battery. In addition, in each of the plurality of batteries 10, a temperature detection sensor 11 (a temperature detection unit), which detects a temperature (an internal temperature) of the battery, and a remaining amount detection sensor 12 (a remaining amount detection unit), which detects a remaining amount of the battery, are provided. In the case of the present embodiment, the remaining amount detection sensor 12 detects a state of charge (SOC), which is an index indicating a charging rate or a state of charge of the battery, as the remaining amount of the battery. Temperature information of the battery that has been detected by the temperature detection sensor 11 and remaining amount information (SOC) of the battery that has been detected by the remaining amount detection sensor 12 are supplied to a power control unit 22 of the power control device 20 to be described later.

Here, the temperature detection sensor 11 and the remaining amount detection sensor 12 are provided in each battery 10 in the present embodiment, but may be provided as components of the power control device 20. In addition, in the present embodiment, an example in which four batteries 10 (MPP1 to MPP4) are used in the power control system 100 will be described, but the number of batteries 10 is not limited to four, and may be two, three, or equal to or more than five.

The power control device 20 is a device that controls transmission of the power (for example, electric current) between the plurality of batteries 10 connected in parallel and the load 30. The power control device 20 controls processing (an operation) of supplying the load 30 with the power that has been output from the plurality of batteries 10, and driving the load 30. In addition to this, the power control device 20 may also control processing (an operation) of supplying (distributing) the plurality of batteries 10 with the power (regenerative power) obtained by the load 30 such as a motor, and charging the plurality of batteries 10. The power control device 20 in the present embodiment can include a power synthesis unit 21 and a power control unit 22.

The power synthesis unit 21 includes, for example, a power synthesis circuit, and synthesizes (integrates) the power that has been output from the plurality of batteries 10. In the power synthesis unit 21, the same number of DC-DC converters 21a with the number of batteries 10 are provided, and can be mounted in the power control system 100. The plurality of DC-DC converters 21a are respectively connected with the plurality of batteries 10. That is, in the power control system 100, a plurality of sets are provided, in each of which one battery 10 and one DC-DC converter 21a are connected in series with each other, and such a plurality of sets are arranged (connected) in parallel to one another. Note that in a case where the power control device 20 is configured to supply the plurality of batteries 10 with the power (the regenerative power) obtained by the load 30, it may be understood that the power synthesis unit 21 serves as a power distributor (a power distribution circuit) that distributes the power from the load 30 to the plurality of batteries 10.

The power control unit 22 is, for example, a power control unit (PCU), and controls the outputs of the power from the plurality of batteries 10, and also controls the driving of the load 30 with the power (synthetic power) that has been output from the power synthesis unit 21. In the case of the present embodiment, the power control unit 22 also performs processing of distributing a demand power value demanded for driving the load 30 (hereinafter, simply referred to as a demand power value, in some cases) to the plurality of batteries 10, and determining a power value caused to be output by each of the plurality of batteries 10. Hereinafter, the processing will be referred to as power value determination processing, in some cases, and its details will be described later. Here, the power control unit 22 may be configured with a computer including at least one processor represented by a central processing unit (CPU), a storage device such as a semiconductor memory, an interface with an external device, and the like. The storage device stores a program for conducting various types of control (including the power value determination processing), and the power control unit 22 (the processor) reads and executes the program stored in the storage device.

In addition, the power control device 20 may include a notification unit 23, which notifies the user of information. The notification unit 23 can be configured with, for example, a display device (a display) that displays information to the user by an image, and/or a voice output device that notifies the user of information by sound. In a case where the power control device 20 is mounted on a vehicle or the like, the notification unit 23 may be configured as a part of the vehicle or the like.

In the power control system 100 using the plurality of batteries 10 in parallel as described above, by the way, the power value caused to be output by each of the plurality of batteries 10 is determined so that the demand power value is shared by the plurality of batteries 10. However, in each battery 10, a power range in which the power can be stably output may vary depending on the temperature (the internal temperature) of the battery. In addition, the temperature of the battery may be different among the plurality of batteries 10 depending on the frequency of use, degradation over time, or the like of the battery. For this reason, unless the demand power value is shared in consideration of the temperature of each of the plurality of batteries 10, it may be difficult to stably obtain the total power value, such as a case where the total value of the power (the total power value) obtained from the plurality of batteries 10 does not temporarily satisfy the demand power value.

Hence, the power control device 20 (the power control unit 22) in the present embodiment sets a power limit value for each battery 10, based on the temperature information of each of the plurality of batteries 10, and distributes (assigns) the demand power value to the plurality of batteries 10 so that the power value caused to be output by each battery 10 does not exceed the power limit value. The temperature information can be information indicating the temperature of each battery 10 that has been detected by the temperature detection sensor 11. The power limit value is a limit value (for example, an upper limit value) that limits the output of the power from the battery 10 and that defines a power range for the battery 10 to be capable of stably outputting the power, and can be set to a different value in accordance with the temperature of the battery 10. The power limit value can be set individually for each of the plurality of batteries 10. Accordingly, the power control device 20 in the present embodiment causes each battery 10 to share the demand power value in accordance with the temperature of each battery 10, and is capable of stably obtaining the total power value obtained from the plurality of batteries 10.

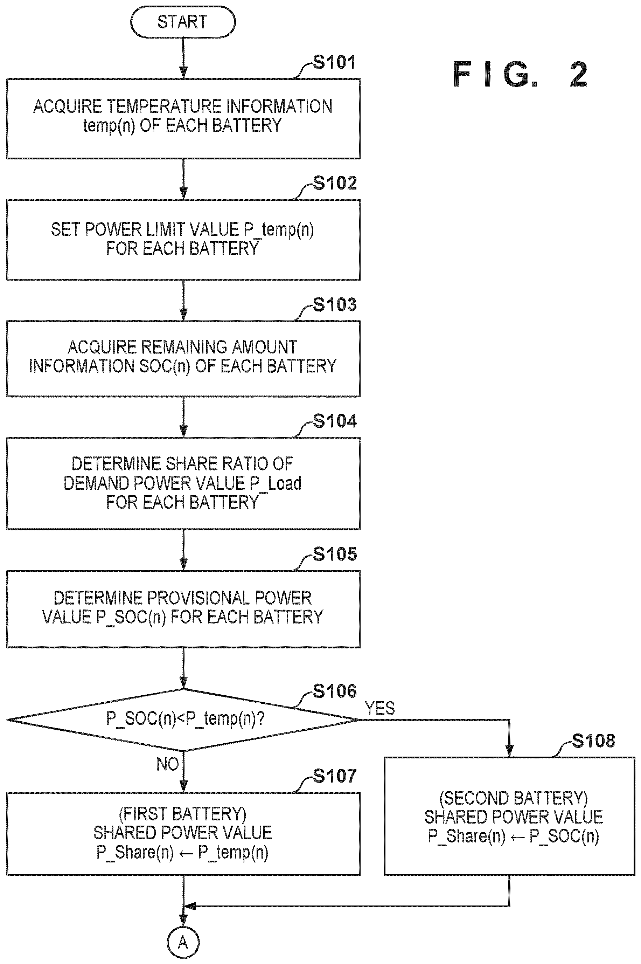

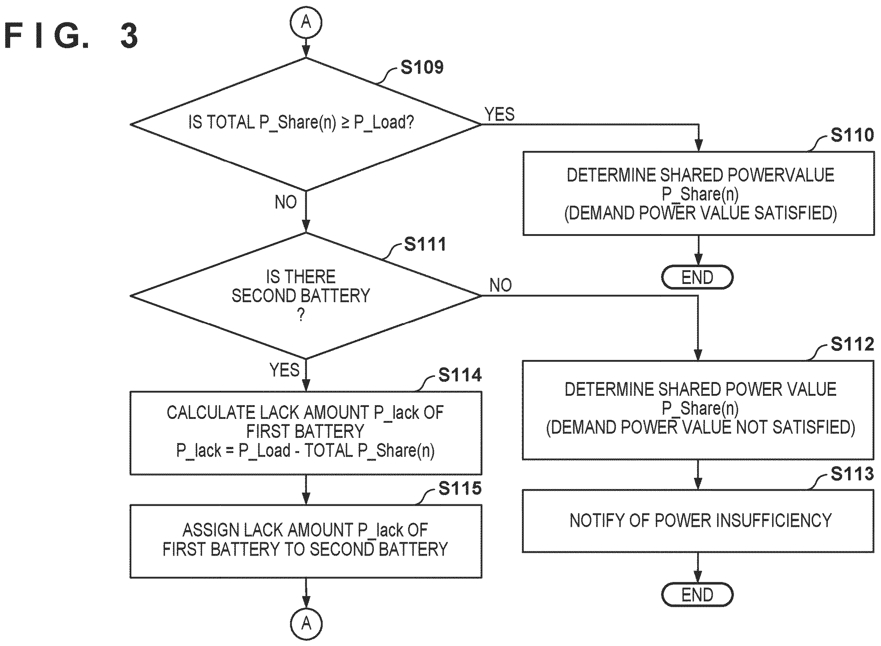

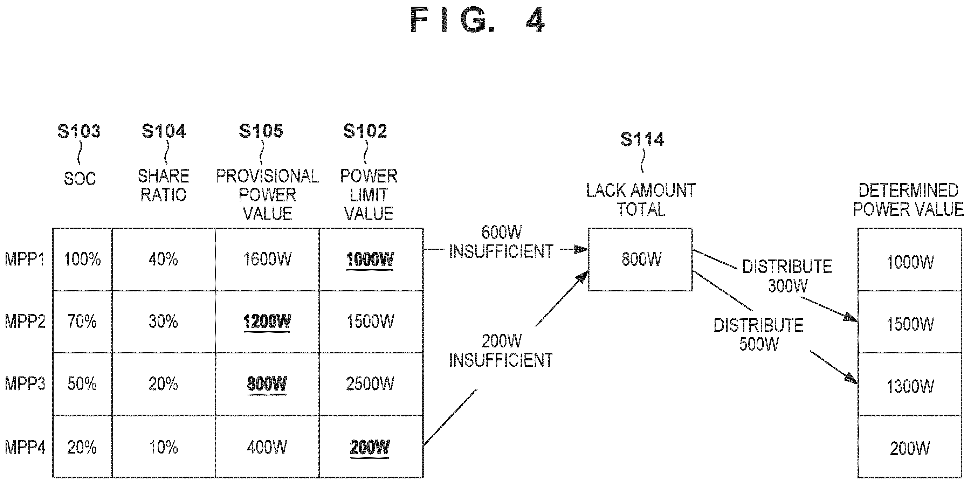

Next, the power value determination processing for each battery 10 will be described. FIGS. 2 and 3 are flowcharts illustrating the power value determination processing for each battery 10. The flowcharts illustrated in FIGS. 2 and 3 can be performed by the power control unit 22 of the power control device 20. In addition, FIG. 4 is a diagram illustrating information or values determined, set, and acquired in each process of the flowcharts illustrated in FIGS. 2 and 3, and can be used for describing a specific example of the power value determination processing for each battery 10. In FIG. 4, the numbers of steps (processes) in which information or values are determined, set, and acquired are illustrated in parentheses. Note that in the following description, information or a value to which "(n)" is applied is determined, set, and acquired for each of the plurality of batteries 10 (the MPP1 to the MPP4 in the present embodiment), and a serial number (1 to 4 in the present embodiment) of the battery 10 can be input into "n".

In step S101, the power control unit 22 acquires temperature information temp(n) of each battery 10. Specifically, the power control unit 22 acquires, from the temperature detection sensor 11, information indicating the temperature of each battery 10 that has been detected by the temperature detection sensor 11 of each battery 10. In the case of the present embodiment, temperature information temp(1) of the MPP1, temperature information temp(2) of the MPP2, temperature information temp(3) of the MPP3, and temperature information temp(4) of the MPP4 are acquired in step S101.

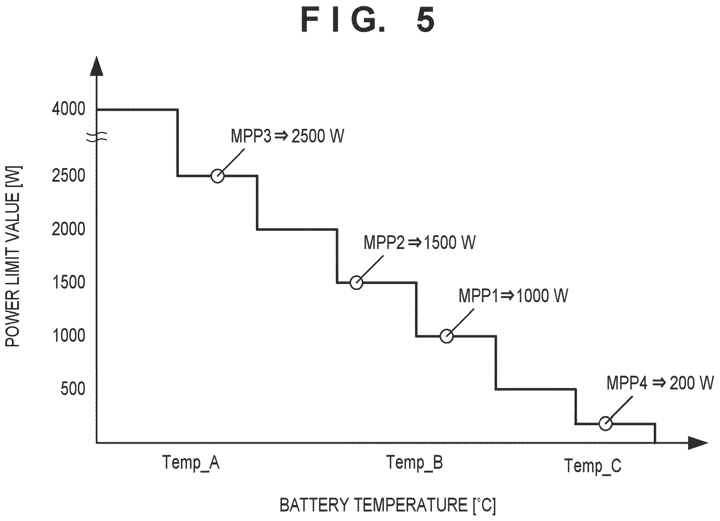

In step S102, the power control unit 22 sets a power limit value P_temp(n) for each battery 10 (setting process). As described above, the power limit value P_temp(n) is a limit value (an upper limit value) that defines a power range in which the battery 10 is capable of stably outputting the power, and can be set, based on information (hereinafter, referred to as correspondence information, in some cases) indicating a correspondence relationship between the battery temperature and the power limit value. FIG. 5 illustrates an example of the correspondence relationship information between the battery temperature and the power limit value. The correspondence relationship information is created beforehand through experiments, simulations, or the like, and is stored in the storage device. As an example, in a case where the temperature of the MPP1 acquired in step S11 is Temp(1), the power control unit 22 sets 1000 W to a power limit value P_temp(1) of the MPP1, based on the correspondence relationship information. Similarly, in a case where the temperatures of the MPP2 to the MPP4 acquired in step S11 are respectively Temp(2), Temp(3), and Temp(4), the power control unit 22 respectively sets 1500 W to a power limit value P_temp(2) of the MPP2, 2500 W to a power limit value P_temp(3) of the MPP3, and 200 W to a power limit value P_temp(4) of the MPP4, based on the correspondence relationship information. Note that Temp(1) is a temperature higher than Temp_B and lower than Temp_C, and Temp(2) is a temperature higher than Temp_A and lower than Temp_B. Temp(3) is a temperature higher than Temp_A and lower than Temp_B, and Temp(4) is a temperature higher than Temp_C.

The subsequent step is a distribution process of distributing (assigning) the demand power value to the plurality of batteries 10 so that the power value output from each of the plurality of batteries 10 does not exceed the power limit value.

In step S103, the power control unit 22 acquires remaining amount information SOC(n) of each battery 10. Specifically, the power control unit 22 acquires, from the remaining amount detection sensor 12, information indicating the remaining amount (SOC) of each battery 10 that has been detected by the remaining amount detection sensor 12 of each battery 10. In the case of the present embodiment, remaining amount information SOC(1) of the MPP1, remaining amount information SOC(2) of the MPP2, remaining amount information SOC(3) of the MPP3, and remaining amount information SOC(4) of the MPP4 are acquired in step S103. In the example illustrated in FIG. 4, the remaining amount information SOC(1) of the MPP1 is 100%, the remaining amount information SOC(2) of the MPP2 is 70%, the remaining amount information SOC(3) of the MPP3 is 50%, and the remaining amount information SOC(4) of the MPP4 is 20%.

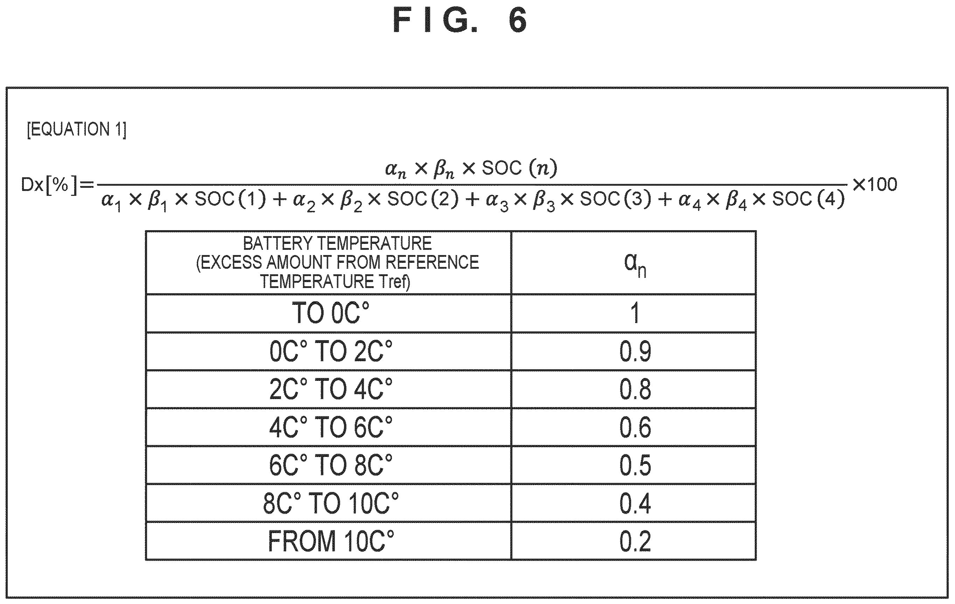

In step S104, the power control unit 22 determines a share ratio Dx of the demand power value P_Load for each battery 10. The share ratio Dx is a ratio of a power value to be assigned to one battery 10 for the demand power value P_Load, and is set so that a total value of the power (a total power value) output from the plurality of batteries 10 equals 100%. Specifically, the power control unit 22 determines the share ratio Dx in accordance with Equation 1 illustrated in FIG. 6, based on the remaining amount information SOC(n) of each battery 10 acquired in step S103. In Equation 1, a coefficient αₙ denotes a coefficient (an output limit coefficient) for limiting the output of the power so that the temperature of each battery 10 does not reach a limit temperature Tlim. For example, the coefficient αₙ may be set in accordance with an excess from a reference temperature Tref at the temperature of each battery 10, and may be determined in accordance with a table illustrated in FIG 6. In addition, a coefficient βₙ denotes a coefficient indicating whether to cause the power to be output (that is, whether to discharge), and "1" is applied to the battery 10 caused to output the power from among the plurality of batteries 10, and "0" is applied to the battery 10 caused not to output the power. Note that in "n" of the coefficients αₙ and βₙ, the serial number of the battery 10 (1 to 4 in the present embodiment) is input.

In the case of the present embodiment, in order to cause all the batteries 10 to output the power, "1" is set to the coefficient βₙ of all the batteries 10. In addition, the coefficient αₙ can take a different value for every battery, but here, "1" is applied to all the batteries 10 in order to simplify the description. According to Equation 1, 40% (≈ 100%/(100% + 70% + 50% + 20%)) is determined for the MPP1, and 30% (≈ 70%/(100% + 70% + 50% + 20%)) is determined for the MPP2. Similarly, 20% (≈ 50%/(100% + 70% + 50% + 20%)) is determined for the MPP3, and 10% (≈ 20%/(100% + 70% + 50% + 20%)) is determined for the MPP2.

In step S105, the power control unit 22 determines a provisional power value P_SOC(n) for each battery 10 (determination process). The provisional power value P_SOC(n) means a power value provisionally determined by distributing the demand power value P_Load to each battery 10 in accordance with the share ratio Dx determined in step S104. Specifically, the power control unit 22 determines the provisional power value P_SOC(n) by multiplying the demand power value P_Load by the share ratio Dx. In the case of the present embodiment, the demand power value is 4000 W. Therefore, 1600 W (= 4000 W × 40%) is determined for the MPP1, and 1200 W (= 4000 W × 30%) is determined for the MPP2. Similarly, 800 W (=4000 W × 20%) is determined for the MPP3, and 400 W (= 4000 W × 10%) is determined for the MPP4.

In step S106, the power control unit 22 compares the power limit value P_temp(n) set in step S102 with the provisional power value P_SOC(n) determined in step S105 for each battery 10, and determines whether the provisional power value P_SOC(n) is smaller than the power limit value P_temp(n). Then, in steps S107 and S108, the power control unit 22 selects the smaller one of the power limit value P_temp(n) and the provisional power value P_SOC(n), as a shared power value P_Share(n) (selection process). The shared power value P_Share(n) means a shared (assigned) power value of the demand power value P_Load, and is set for each battery 10.

With regard to a battery group (hereinafter, referred to as a first battery group, in some cases) including one or more batteries 10 having the power limit value P_temp(n) smaller than the provisional power value P_SOC(n), the processing proceeds to step S107, and the power control unit 22 selects (sets) the power limit value P_temp(n) as the shared power value P_Share(n) for each battery in the first battery group. In the case of the present embodiment, in the MPP1 and the MPP4, the power limit value P_temp(n) is smaller than the provisional power value P_SOC(n), and thus the MPP1 and the MPP4 are classified into the first battery group. In the MPP1 and the MPP4, the power limit value P_temp(n) is selected as the shared power value P_Share(n). On the other hand, with regard to a battery group (hereinafter, referred to as a second battery group, in some cases) including one or more batteries 10 having the provisional power value P_SOC(n) smaller than the power limit value P_temp(n), the processing proceeds to step S108, and the power control unit 22 selects (sets) the provisional power value P_SOC(n) as the shared power value P_Share(n) for each battery in the second battery group. In the case of the present embodiment, in the MPP2 and the MPP3, the provisional power value P_SOC(n) is smaller than the power limit value P_temp(n), and thus the MPP2 and the MPP3 are classified into the second battery group. In the MPP2 and the MPP3, the provisional power value P_SOC(n) is selected as the shared power value P_Share(n). In FIG. 4, for each battery 10 (the MPP1 to the MPP4), out of the provisional power value P_SOC(n) and the power limit value P_temp(n), the one selected as the shared power value P_Share(n) is underlined.

In step S109, the power control unit 22 determines whether the total of the shared power values P_Share(n) of the plurality of batteries 10 is equal to or larger than the demand power value P_Load. In the case of the present embodiment, the total of the shared power values P_Share(n) is a value obtained by adding the shared power values P_Share(n) of the MPP1 to the MPP4, and is expressed as "total P_Share(n)" in FIG. 3. In a case where the total of the shared power values P_Share(n) is equal to or larger than the demand power value P_Load, the processing proceeds to step S110, and the power control unit 22 determines the shared power value P_Share(n) as the power value caused to be output by each battery 10. In this case, by controlling the output of the power from each battery 10 in accordance with the shared power value P_Share(n), the demand power value P_Load of the load 30 is satisfied. On the other hand, in a case where the total of the shared power values P_Share(n) is smaller than the demand power value P_Load, the processing proceeds to step S111.

In step S111, the power control unit 22 determines whether there is the second battery group in which the provisional power value P_SOC(n) is selected as the shared power value P_Share(n) among the plurality of batteries 10. In a case where there is no battery in the second battery group among the plurality of batteries 10 and all the batteries 10 are classified into the first battery group, that is, in a case where the power limit value P_temp(n) is selected as the shared power value P_Share(n) in all the batteries 10, the processing proceeds to step S112, and the power control unit 22 determines the shared power value P_Share(n) as the power value caused to be output by each battery 10. In this case, even though the output of the power from each battery 10 is controlled in accordance with the shared power value P_Share(n), the demand power value P_Load of the load 30 is not satisfied. For this reason, in step S113, the power control unit 22 notifies the user that the demand power value is not obtainable by outputting the power from the plurality of batteries 10 (that is, the fact that the power is insufficient) via the notification unit 23. With this notification, the user is able to recognize that it is necessary to take measures such as battery replacement. On the other hand, in a case where there is a battery in the second battery group among the plurality of batteries 10, the processing proceeds to step S114.

In step S114, the power control unit 22 calculates a lack amount P_lack of the first battery group. Specifically, the power control unit 22 calculates a difference between the total of the shared power values P_Share(n) of the plurality of batteries 10 and the demand power value P_Load, as the lack amount P_lack of the first battery group. In the case of the present embodiment, the MPP1 and the MPP4 are classified into the first battery group, and the power limit value P_temp(n) is selected as the shared power value P_Share(n). The shared power value P_Share(1) of the MPP1 is smaller by 600 W than the provisional power value P_SOC(1), and the shared power value P_Share(4) of the MPP4 is smaller by 200 W than the provisional power value P_SOC(4). That is, the lack amount P_lack of the first battery group is 800 W in total.

In step S115, the power control unit 22 assigns the lack amount P_lack of the first battery group calculated in step S114 to the second battery group (assignment process). Specifically, the power control unit 22 assigns (distributes) the lack amount P_lack of the first battery group to the second battery group in accordance with a priority order set for each battery in the second battery group. The priority order can be set, based on, for example, the remaining amount information SOC(n) of each battery 10 acquired in step S103. The power control unit 22 assigns, on a priority basis, the lack amount P_lack of the first battery group to the battery having the highest remaining amount (SOC) in the second battery group. In the case of the present embodiment, as illustrated in FIG. 4, out of the MPP2 and the MPP3 that have been classified into the second battery group, the lack amount P_lack of the first battery group is assigned on a priority basis to the MPP2 having a higher remaining amount (SOC). With regard to 800 W, which is the lack amount P_lack of the first battery group, the power control unit 22 assigns 300 W, which is a difference between a margin amount of the power value in the MPP2 (that is, a difference between the provisional power value P_SOC(2) and the power limit value P_temp(2)), to the MPP2. Accordingly, in the MPP2, a value (1500 W) obtained by adding such an assigned amount (300 W) to the provisional power value P_SOC(2) is determined as the power value caused to be output by the MPP2. In addition, the power control unit 22 assigns, to the MPP3, the remaining 500 W out of 800 W, which is the lack amount P_lack of the first battery group. Accordingly, in the MPP3, a value (1300 W) obtained by adding the assigned amount (500 W) to the provisional power value P_SOC(3) is determined as the power value caused to be output by the MPP3. When step S115 ends, the processing proceeds to step S109.

Here, the condition for the priority order for distributing the lack amount P_lack of the first battery group to the second battery group is not limited to descending order of the remaining amount (SOC), and may be ascending order of the remaining amount (SOC). The condition for the priority order may be set by the power control unit 22, when the power control system 100 starts operating. For example, the power control unit 22 can set whether the condition for the priority order is set in descending order of the remaining amount (SOC) or ascending order of the remaining amount (SOC) in accordance with the demand power value P_Load acquired from the load 30 when the power control system 100 starts operating. In a case where the demand power value P_Load of the load 30 is equal to or larger than a specified value and it is necessary to attain the demand power value P_Load by using all of the plurality of batteries 10, the power control unit 22 sets the condition for the priority order in descending order of the remaining amount (SOC), and assigns the lack amount P_lack of the first battery group on a priority basis to the battery having the largest remaining amount in the second battery group. In this case, high-output operation of the plurality of batteries 10 is achievable. On the other hand, in a case where the demand power value P_Load of the load 30 is smaller than the specified value and the demand power value P_Load is attainable without using all of the plurality of batteries 10, the power control unit 22 sets the condition for the priority order in ascending order of the remaining amount (SOC), and assigns the lack amount P_lack of the first battery group on a priority basis to the battery having the smallest remaining amount in the second battery group. In this case, the operating time of the plurality of batteries 10 is extendable. Alternatively, at the time of battery replacement, the frequency of collectively replacing a plurality of batteries (for example, all batteries) is reduced, and it is easily sufficient to sporadically replace the battery one by one.

As described above, the power control device 20 (the power control unit 22) in the present embodiment sets the power limit value for each battery 10, based on the temperature information of each of the plurality of batteries 10, and distributes (assigns) the demand power value to the plurality of batteries 10 so that the power value caused to be output by each battery 10 does not exceed the power limit value. This enables a reduction of an event in which the total value of the power (the total power value) obtained from the plurality of batteries 10 temporarily does not satisfy the demand power value, and enables the total power value to be obtained stably. In addition, by applying the power control device 20 in the present embodiment, even though a plurality of batteries 10 having different frequencies of use or degradation over time are used, it becomes possible to obtain the power stably from the plurality of batteries 10. Therefore, it becomes possible to reuse the same battery between pieces of equipment having different use cases of the battery from each other, such as a vehicle and a work machine. That is, by applying the power control device 20 in the present embodiment, it becomes possible to reuse the battery not only for the vehicle but also for equipment used in a construction site, a landscape construction site, or the like in the precondition of which the temperature or SOC of the battery varies depending on used or unused of the battery (MPP).

<Summary of Embodiments>
1. A power control device of the above-described embodiments is a power control device (e.g. 20) that controls transmission of power between a plurality of batteries (e.g. 10) connected in parallel and a load (e.g. 30), the power control device characterized by comprising:
   a power synthesis unit (e.g. 21) that synthesizes the power output from the plurality of batteries; and
   a power control unit (e.g. 22) that controls an output of the power from each of the plurality of batteries, and that also controls driving of the load with the power output from the power synthesis unit,
   wherein the power control unit determines a power value caused to be output from each of the plurality of batteries by performing:
      a setting process (e.g. S102) of setting a power limit value for limiting the output of the power for each of the plurality of batteries, based on temperature information of each of the plurality of batteries; and
      a distribution process (e.g. S103-S115) of distributing a demand power value demanded for driving the load to the plurality of batteries so that a power value output from each of the plurality of batteries does not exceed the power limit value.
   According to this configuration, an event in which the total value of the power (the total power value) obtained from the plurality of batteries does not temporarily satisfy the demand power value is reduced, and the total power value can be stably obtained. In addition, even though a plurality of batteries having different frequencies of use or degradation over time are used, the power can be stably obtained from the plurality of batteries. Therefore, it becomes possible to reuse the same battery between pieces of equipment having different battery use cases from each other.
2. In the above-described embodiments,
   the distribution process includes:
   a determination process (e.g. S105) of determining the power value that is provisional to be shared by each of the plurality of batteries, as a provisional power value, by distributing the demand power value to the plurality of batteries in accordance with remaining amount information of each of the plurality of batteries;
   a selection process (e.g. S106-S107) of selecting a smaller one of the provisional power value and the power limit value for each of the plurality of batteries; and
   an assignment process (e.g. S114-S115)of assigning a difference between the provisional power value and the power limit value in a first battery group including at least one battery for which the power limit value is selected in the selection process among the plurality of batteries, to a second battery group including the at least one battery for which the provisional power value is selected in the selection process among the plurality of batteries.
   According to this configuration, the demand power value can be appropriately distributed with high accuracy to the plurality of batteries, so that the power value can be stably obtained from the plurality of batteries.
3. In the above-described embodiments,
   in the assignment process, the power control unit assigns the difference in the first battery group to the second battery group, based on the remaining amount information of each battery in the second battery group.
   According to this configuration, the demand power value can be appropriately distributed with high accuracy to the plurality of batteries.
4. In the above-described embodiments,
   in the assignment process, the power control unit assigns the difference in the first battery group to the second battery group, based on the remaining amount information of each battery in the second battery group, so as to assign the difference on a priority basis to a battery having a largest remaining amount in the second battery group.
   According to this configuration, the demand power value can be appropriately distributed with high accuracy to the plurality of batteries, and in addition, the high-output operation of the plurality of batteries is achievable.
5. In the above-described embodiments,
   in the assignment process, the power control unit assigns the difference in the first battery group to the second battery group, based on the remaining amount information of each battery in the second battery group, so as to assign the difference on a priority basis to a battery having a smallest remaining amount in the second battery group.
   According to this configuration, the demand power value can be appropriately distributed with high accuracy to the plurality of batteries, and the operating time of the plurality of batteries is extendable. Alternatively, at the time of battery replacement, the frequency of collectively replacing a plurality of batteries (for example, all batteries) is reduced, and it is easily sufficient to sporadically replace the battery one by one.
6. In the above-described embodiments,
   the power control device further comprises a notification unit (e.g. 23) that notifies a user of information, and
   in a case where the power limit value is selected in the selection process in all of the plurality of batteries, the power control unit notifies the user via the notification unit that the demand power value is not obtainable from the plurality of batteries.
   According to this configuration, the user is able to recognize that the power from the plurality of batteries that are currently used is insufficient, and is able to take measures such as battery replacement.
7. In the above-described embodiments,
   each of the plurality of batteries includes a remaining amount detection unit (e.g. 12) that detects a remaining amount of a battery, and
   the power control unit acquires the remaining amount information from the remaining amount detection unit.
   According to this configuration, the power control unit is capable of grasping the remaining amount of the battery properly.
8. In the above-described embodiments,
   each of the plurality of batteries includes a temperature detection unit (e.g. 11) that detects a temperature of a battery, and
   the power control unit acquires the temperature information from the temperature detection unit.
   According to this configuration, the power control unit is capable of grasping the temperature of the battery properly.
9. In the above-described embodiments,
   the power synthesis unit includes a plurality of DC-DC converters (e.g. 21a) respectively connected with the plurality of batteries.

According to this configuration, it becomes possible to charge and discharge the plurality of batteries appropriately.

The invention is not limited to the foregoing embodiments, and various variations/changes are possible within the spirit of the invention.

This application claims priority from Japanese Patent Application No. 2023-033871 filed March 6, 2023, which is hereby incorporated by reference herein.

### REFERENCE SIGNS LIST

- 10: Battery
- 11: Temperature detection sensor
- 12: Remaining amount detection sensor
- 20: Power control device
- 21: Power synthesis unit (power synthesis circuit)
- 21a: DC-DC converter
- 22: Power control unit
- 23: Notification unit
- 30: Load
- 100: Power control system

## Claims

1. A power control device that controls transmission of power between a plurality of batteries connected in parallel and a load, the power control device **characterized by** comprising:
a power synthesis unit that synthesizes the power output from the plurality of batteries; and
a power control unit that controls an output of the power from each of the plurality of batteries, and that also controls driving of the load with the power output from the power synthesis unit,
wherein the power control unit determines a power value caused to be output from each of the plurality of batteries by performing:
a setting process of setting a power limit value for limiting the output of the power for each of the plurality of batteries, based on temperature information of each of the plurality of batteries; and
a distribution process of distributing a demand power value demanded for driving the load to the plurality of batteries so that a power value output from each of the plurality of batteries does not exceed the power limit value.

2. The power control device according to claim 1, **characterized in that** the distribution process includes:
a determination process of determining the power value that is provisional to be shared by each of the plurality of batteries, as a provisional power value, by distributing the demand power value to the plurality of batteries in accordance with remaining amount information of each of the plurality of batteries;
a selection process of selecting a smaller one of the provisional power value and the power limit value for each of the plurality of batteries; and
an assignment process of assigning a difference between the provisional power value and the power limit value in a first battery group including at least one battery for which the power limit value is selected in the selection process among the plurality of batteries, to a second battery group including the at least one battery for which the provisional power value is selected in the selection process among the plurality of batteries.

3. The power control device according to claim 2, **characterized in that** in the assignment process, the power control unit assigns the difference in the first battery group to the second battery group, based on the remaining amount information of each battery in the second battery group.

4. The power control device according to claim 3, **characterized in that** in the assignment process, the power control unit assigns the difference in the first battery group to the second battery group, based on the remaining amount information of each battery in the second battery group, so as to assign the difference on a priority basis to a battery having a largest remaining amount in the second battery group.

5. The power control device according to claim 3, **characterized in that** in the assignment process, the power control unit assigns the difference in the first battery group to the second battery group, based on the remaining amount information of each battery in the second battery group, so as to assign the difference on a priority basis to a battery having a smallest remaining amount in the second battery group.

6. The power control device according to any one of claims 2 to 5, **characterized by** further comprising a notification unit that notifies a user of information,
wherein in a case where the power limit value is selected in the selection process in all of the plurality of batteries, the power control unit notifies the user via the notification unit that the demand power value is not obtainable from the plurality of batteries.

7. The power control device according to any one of claims 2 to 6, **characterized in that**
each of the plurality of batteries includes a remaining amount detection unit that detects a remaining amount of a battery, and
the power control unit acquires the remaining amount information from the remaining amount detection unit.

8. The power control device according to any one of claims 1 to 7, **characterized in that**
each of the plurality of batteries includes a temperature detection unit that detects a temperature of a battery, and
the power control unit acquires the temperature information from the temperature detection unit.

9. The power control device according to any one of claims 1 to 8, **characterized in that** the power synthesis unit includes a plurality of DC-DC converters respectively connected with the plurality of batteries.

10. A vehicle comprising the power control device according to any one of claims 1 to 9.

11. A power control method, by a power control device, for controlling transmission of power between a plurality of batteries connected in parallel and a load, the power control method **characterized by** comprising determining a power value caused to be output by each of the plurality of batteries by performing:
a setting process of setting a power limit value for limiting an output of the power for each of the plurality of batteries, based on temperature information of each of the plurality of batteries; and
a distribution process of distributing a demand power value demanded for driving the load to the plurality of batteries so that a power value output from each of the plurality of batteries does not exceed the power limit value.
